Europäisches Patentamt

European Patent Office

Office européen des brevets

(19)

(11) Publication number: **0 001 508**
**B1**

(12) **EUROPEAN PATENT SPECIFICATION**

(45) Date of publication of patent specification: **26.01.83**

(21) Application number: **78300462.5**

(22) Date of filing: **05.10.78**

(51) Int. Cl.³: **H 01 C 7/04,** G 01 N 27/12, C 04 B 35/46

(54) Thermistor and method of fabricating.

(30) Priority: **05.10.77 US 839700**

(43) Date of publication of application:
**18.04.79 Bulletin 79/8**

(45) Publication of the grant of the patent:
**26.01.83 Bulletin 83/4**

(84) Designated Contracting States:
**BE DE FR GB NL SE**

(56) References cited:
**US - A - 3 459 503**
**US - A - 3 639 132**
**US - A - 3 893 230**

(73) Proprietor: **FORD MOTOR COMPANY LIMITED**
**Eagle Way**
**Brentwood Essex CM13 3BW (GB)**
(84) **GB**
(73) Proprietor: **FORD-WERKE AKTIENGESELLSCHAFT**
**Ottoplatz 2 Postfach 21 03 69**
**D-5000 Köln 21 (DE)**
(84) **DE**
(73) Proprietor: **FORD FRANCE SOCIETE ANONYME**
**344 Avenue Napoléon Bonaparte B.P. 307**
**F-92506 Rueil Malmaison Cedex (FR)**
(84) **FR**
(73) Proprietor: **Ford Motor Company**
**Dearborn County of Wayne Michigan (US)**
(84) **BE NL SE**

(72) Inventor: **Merchant, Stanley Richard**
**30001 Leona Street**
**Garden City Michigan 48135 (US)**
Inventor: **Cermak, Michael Joseph**
**17281 Edwards**
**Southfield Michigan 48076 (US)**

(74) Representative: **Drakeford, Robert William et al,**
**15/448 Research & Engineering Centre**
**Laindon Basildon Essex SS15 6EE (GB)**

Courier Press, Leamington Spa, England

# Thermistor and method of fabricating

This invention relates to thermistors.

It has been determined that the operation of a conventional automotive internal combustion engine produces substantially quantities of deleterious gaseous combustion by products. The principal pollutants so produced are hydrocarbons, carbon monoxide and varies oxides of nitrogen. Extensive investigation into the combustion process, examination of alternative combustion processes and detailed studies of exhaust gas treatment devices have led to the conclusion that the use of a catalytic converter within the exhaust system of an internal combustion engine provides a practical and effective technique for substantially reducing the emission of the deleterious gaseous combustion by products into the atmosphere.

A catalytic exhaust gas treatment device or converter which is capable of substantially simultaneously converting all three of the aforementioned principal pollutants into water, carbon dioxide and gaseous nitrogen is referred to as a "three-way catalyst". However, for the known three-way catalyst devices to be most effective, the gaseous by products introduced into the converter must be the by products of combustion of a substantially stoichiometric air/fuel ratio. Such three-way catalyst devices are said to have a very narrow "window" of air/fuel ratios at which the device is most effeciently operative on the three principal pollutants. By way of example, if $\lambda$ is the air/fuel ratio normalized to stoichiometry, the window may extend from about $0.99\lambda$ to about $1.01\lambda$. Such a three-way catalyst device is described, for example, in United States Letters patent 3,895,093 issued to Weidenbach et al. on July 15, 1975, assigned to Kali Chemie Aktiengesellschaft and titled "catalytic Removal of Carbon Monoxide Unburned Hydrocarbon and Nitrogen Oxide from Automotive Exhaust Gas". For air/fuel ratios of the combustion mixture on either side of the window, one or two of the principal pollutants will be converted in only very small percentage efficiencies. Within the window, the three principal pollutants will be converted at very high efficiencies approaching 90% in some cases. In view of the narrowness of the catalytic converter window it has been determined that the associated internal combustion engine must be operated with a combustible mixture as close as possible to stoichiometry.

The most satisfactory technique for assuring continuous or substantially continuous operation at the optimum air/fuel ratio is through the utilization of an appropriate feedback mechanism. In implementing suitable feedback control systems it has been proposed to employ sensors responsive to the chemistry of the exhaust gases, that is, the hot gaseous combustion by products, in order to control the precise air content and/or fuel content of the air/fuel mixture being provided to the engine. One type of electrochemical exhaust gas sensor employs a ceramic material which demonstrates a predictable electrical resistance change when the partial pressure of oxygen of its environment changes. An example of such a material is titania (titanium dioxide having a general formula $TiO_2$). Such sensors can be fabricated generally in accordance with the teachings of United States Letters patent 3,886,785 issued to Stadler et al., entitled "Gas Sensor and Method of Manufacture". Tests of such devices have shown that at elevated and substantially constant temperatures the devices will demonstrate a virtual step change in resistance for rich-to-lean and lean-to-rich excursions of the air/fuel ratio of the combustion mixture producing the exhaust gas environment of the device.

A principal difficulty which has been encountered with such variable resistance devices resides in the fact that such devices will demonstrate a measurable resistance change which is also a function of change of the temperature of the ceramic material. For example, a temperature change of about 500°F (260°C) produces a measurable resistance change on the order of magnitude of a sensed rich-to-lean or lean-to-rich air/fuel mixture change. Such a temperature variation may be encountered, depending of course to some extent on the location of placement of the sensor within an exhaust system, during acceleration of the associated engine from idle speed to highway speeds. Heretofore, exhaust gas sensors which employed a variable resistance sensor ceramic have required that the temperature of the material be relatively closely controlled for reliable use in a feedback system intended to provide an internal combustion engine with very precise air/fuel ratio control.

Temperature control of the associated sensor as, for example, disclosed in US—A— 3893230 has proved to be an expensive and not wholly satisfactory technique for adapting such variable resistance sensor ceramic materials to air/fuel ratio feedback control systems in automotive internal combustion engines. In order to overcome the difficulties encountered, it has been suggested to combine a thermistor in an electrical series circuit with the variable resistance exhaust gas sensor and to operate the electrical series circuit as a voltage divider network deriving a useful voltage signal from the junction between the thermistor and the variable resistive gas sensor element. However, known thermistors are not capable of operating within the exhaust gas environment of an internal combustion engine. To operate within such an environment, the thermistor must be capable of withstanding temperatures in the range of from 700—1500°F (370—815°C) for extended periods of time and also be otherwise capable of tolerating the adverse chemical environment of an automotive engine exhaust system.

According to the present invention there is provided a thermistor comprising: a body of ceramic material; and a pair of electrical leads embedded in mutually noncontacting relation in said body, said ceramic material demonstrating an electrical resistance which varies with temperature and with partial pressure of oxygen at elevated temperatures; characterised in that said body has a density sufficiently close to the theoretical density of the ceramic material that the rate of change of electrical resistance of the body in response to changes in partial pressure of oxygen is substantially reduced in comparison with the rate of change of electrical resistance in response to changes in temperature.

The invention also provides a method of manufacturing a thermistor comprising the steps of forming a powder of high temperature stable phase ceramic material having an electrical resistance which varies with temperature and with partial pressure of oxygen; preparing a sinterable body from said powder; and sintering the body, characterised by embedding a pair of electrical leads in the body in mutually non-contacting relation and in that the body is sintered sufficiently to produce a body having a density sufficiently close to the theoretical density of the ceramic material that the rate of change of electrical resistance of the body in response to changes in partial pressure of oxygen - is substantially reduced in comparison with the rate of change of electrical resistance in response to changes in temperature.

In analysing the reason why a partial pressure of oxygen responsive ceramic material such as titania also demonstrates a measurable resistance change in the presence of variation in temperature, it was determined that ceramic material functions as a composite variable resistor having a resistance variation component which is responsive to changes in partial pressure of oxygen and a further resistance component which is responsive to changes in temperature. Although it is known, for example from US patent specifications Nos: 3,459,503 and 3,639,132 to produce high density (99% theoretical) sintered compacts of titanium dioxide, the prior art teaches that in relation to oxygen gas sensors the responsiveness of the oxygen sensitivity of titania ceramic material operated at high temperature is promoted in large measure by maintaining a porous device. For example US—A—3893230 recommends the use of bodies of ceramic material having densities in the range 80—95% of theoretical in preference to bodies of higher densities. We have determined that a suitable high temperature thermistor may be fabricated by utilising titania ceramic material which is processed to achieve a density which closely approaches the theoretical density of the material. We have determined that substantial reductions in the oxygen sensitivity responsiveness of the titania material will produce a device which behaves as if it were not responsive to oxygen concentrations at all in the time frame of normal automotive vehicle operation. The present invention thus provides a thermistor comprised of titania ceramic material which has been processed to achieve a density approaching 100% of theoretical density, especially 97% or more of theoretical density, for use in combination with a variable resistive partial pressure of oxygen responsive ceramic in an exhaust gas sensor.

A preferred embodiment of the invention will now be described, by way of example only, with reference to the drawings, in which:—

Figure 1 illustrates an exhaust gas sensor construction incorporating a thermistor according to the present invention.

Figure 2 illustrates, in an exploded view, the exhaust gas sensor according to Figure 1.

Figure 3 illustrates the electrical series connection of the partial pressure of oxygen responsive ceramic sensor member with a thermistor member according to the present invention.

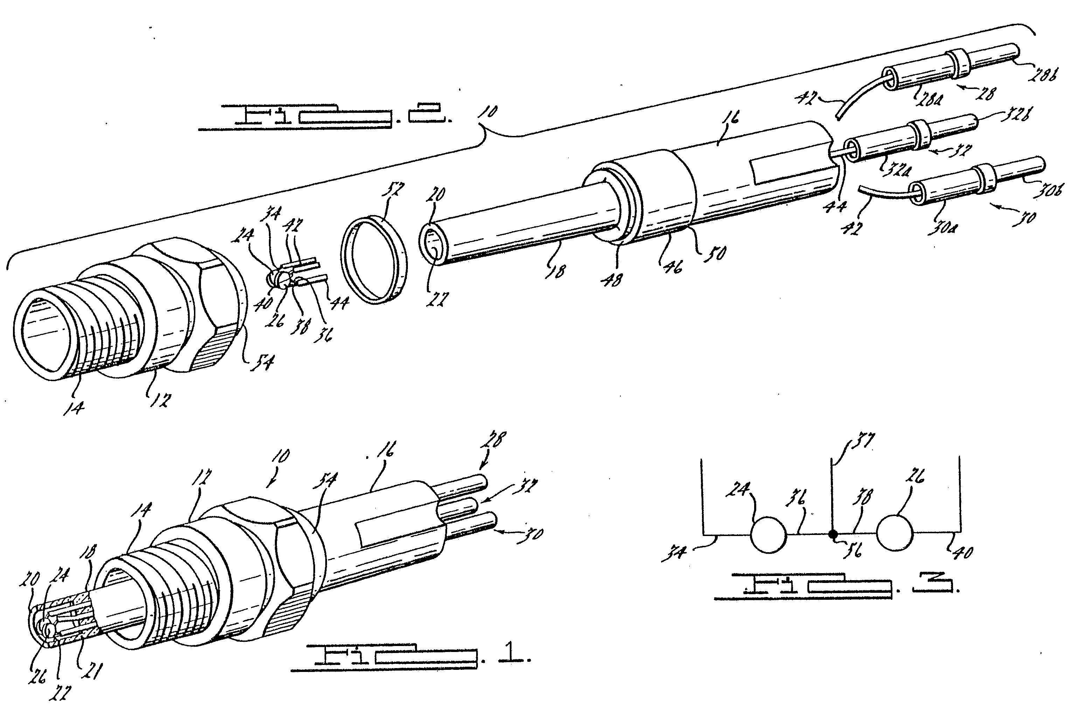

Referring now to the drawing wherein like numerals designate like structure throughout the various views thereof, an exhaust gas sensor 10 is shown in Figure 1. Exhaust gas sensor 10 is of utility, for example, as the partial pressure of oxygen responsive element insertable into the exhaust system of an internal combustion engine or a furnace for monitoring the partial pressure of oxygen of the gaseous combustion by products produced thereby in order to generate a signal indicative of the quality of the combustion process. In particular, the equivalence ratio, $\lambda$, of the combustion mixture being provided to the engine or furnace may be determined by analysis of the partial pressure of oxygen within the exhaust gases.

With reference now to Figures 1 and 2, and particularly to Figure 2, the exhaust gas sensor 10 incorporating the present invention is illustrated and one possible method of assembly is described. Exhaust gas sensor 10 is provided with a housing means 12 which is threaded as at 14 for engagement with a suitably threaded aperture provided therefore within the exhaust gas conduit, not shown, of the combustion source. A ceramic insulator member 16 extends through housing means 12 and includes a forwardly projecting sensor support portion 18. The sensor support portion 18 includes a forwardly projecting collar 20 which defines a well or cavity 22. (The forwardly projecting portion 18 is broken away at 21 in Figure 1 for illustrative purposes). The sensor 10 includes a pair of ceramic sensor elements or members 24, 26 received within well 22. Three electrical terminal members 28, 30, 32 extend rearwardly from ceramic insulator member 16. The electrical terminal members 28, 30, 32 are adapted for receipt of suitable mating connectors, not shown, to electrically communicate exhaust gas sensor 10 with associated utilization electrical or electronic circuitry (not shown).

The insert portions 28a, 30a, 32a of each of the electrical terminal members 28, 30 and 32 may be cemented into position within the rear portion of ceramic insulator member 16. The preferred cement is a catalytic agent, low temperature curable cement which cures to a high density. A suitable cement is, for example, sold under the trade name "Sauereisen #31". The terminal members 28, 30 and 32 are arranged to project an electrical contact portion 28b, 30b and 32b of each terminal member 28, 30 and 32 rearwardly from the rear face of ceramic insulator member 16.

The ceramic sensor elements 24, 26 comprise a partial pressure of oxygen responsive ceramic such as titania, for example sensor element 26, and a temperature compensating thermistor according to the present invention, for example sensor element 24. As used herein, the term "thermistor" refers to an electronic device which has an electrical property, such as its electrical resistance, which varies rapidly and predictably with the temperature of the device and which property varies only slightly, if at all, in short periods of time in response to changes in partial pressure of oxygen of the environment of the device.

The thermistor element according to the present invention, ceramic sensor element 24, is connected electrically in series with the partial pressure of oxygen responsive element, sensor element 26, in order to compensate for any tendency of the partial pressure of oxygen responsive element 26 to change its electrical property in response to temperature variation. The series connected ceramic sensor element 24, 26 are arranged to be exposed to substantially the same exhaust gas environment and are arranged to define an electrical voltage divider network wherein the desired output signal is derived from the circuit junction between the ceramic sensor elements, i.e., the junction of the thermistor element with the partial pressure of oxygen responsive sensor element. Such an arrangement is described and claimed in our European Patent Application No 78300466.7.

Each ceramic sensor element 24, 26 is provided with a pair of electrical leads 34, 36, 38, 40. Electrical leads 34 and 40 are provided with individual insulating sleeve members 42. The electrical leads 36, 38 are shown being provided with a further insulating sleeve 44. Insulating sleeve members 42, 44 with their interiorly received electrical leads 34, 36, 38 and 40 are threaded through longitudinally extending bores or passages within, and which extend completely through, ceramic insulator member 16 from the bottom of well or cavity 22 to the rear face of ceramic insulator member 16. Electrical lead 34 and its associated insulating sleeve 42 are inserted into the insert portion 28a of electrical terminal member 28. The electrical lead 34 is electrically united with the electrical contact portion 28b of terminal member 28. Similarly, electrical lead 40 and its associated insulator member 42 are inserted into the insert portion 30a of second electrical terminal member 30. The electrical lead 40 is electrically united with electrical contact portion 30b of terminal member 30. The conductor formed by sensor leads 36, 38 and the associated insulator sleeve member 44 are similarly inserted into the insert portion 32a of electrical terminal 32 and the conductive portion thereof is electrically united with the electrical contact portion 32b of terminal member 32.

The ceramic sensor elements 24, 26 are situated with the well or cavity 22 and are shown to be supported by their associated electrical leads 34, 36, 38 and 40. Projecting collar 20 thus may be operative upon insertion of the exhaust gas sensor 10 into an exhaust gas system to shield the ceramic sensor elements 24, 26 from impact by any solid particles which may be dislodged from the interior surface of the exhaust gas conduit. Collar 20 also protects the electrical leads 43, 36, 38 and 40 from flexure induced by pressure and exhaust gas flow fluctuations within the exhaust gas system. Collar 20 further protects the ceramic sensor elements 24, 26 and their electrical leads 34, 36, 38 and 40 from possible damage during assembly and from handling damage prior to or during installation into an exhaust gas system. Such an arrangement is described and claimed in our copending European Patent Application No 78300464.1.

Ceramic insulator member 16 is provided with a centrally position enlarged annular portion 46 which is provided with a seal receiving recess 48 at its forward shoulder. Enlarged annular portion 46 is provided with an abutment shoulder 50 at its rear. The forwardly projecting portion 18 of ceramic insulator member 16 is inserted through seal member 52 and seal member 52 is loosely received within recess 48. The ceramic insulator member 16 is then inserted into housing means 12. The rear portion 54 of housing means 12 is then crimped or otherwise deformed into close intimate contact with the rear shoulder 50 of the central portion 46 of ceramic insulator means 16 to compressively and sealingly confine seal member 52 between recess 48 and a suitably provided shoulder within the central portion of housing means 12. Seal member 52 is operative to define a fluid tight barrier to flow around insulator member 16 through housing means 12. Seal member 52 is operative to establish a fluid tight barrier between the interior of an exhaust gas conduit and the exterior of the exhaust gas conduit into which an exhaust gas sensor 10 has been inserted.

Referring now to Figure 3, the electrical series connection between ceramic sensor elements 24 and 26 and electrical leads 34, 36, 38 and 40 is illustrated. Further details of this circuit are described in our European patent application No: 78300466.6. Electrical leads 36, 38 are electrically united, as by welding, at junction 56. A single electrical lead 37 extends from junction 56. With reference to Figures 1 and 2, electrical lead 37 extends from cates, for example, with terminal member 30 and electrical lead 37 may extend through insulating member 44 to communicate sensor leads 36, 38 for example, with terminal member 32.

One of the ceramic sensor elements, for example sensor element 24, is a high temperature thermistor fabricated according to the present invention. The other of the sensor elements, for example sensor element 26, is a variably resistive partial pressure of oxygen responsive ceramic, such as for example titania, which also demonstrates an electrical resistance variation in response to changes in its temperature. Other materials having similar properties will be known to those skilled in the art. The partial pressure of oxygen responsive sensor element 26 may be formed of titania material in the manner described in issued United States patent 3,886,785. The preferred form of partial pressure of oxygen responsive ceramic sensor element 26 to be used in Fabricating exhaust gas sensor 10 is the improved form described in the above-mentioned patent application Serial No: 78300464.1. Preferably, the thermistor member 24 and the partial pressure of oxygen responsive member 26 are fabricated from the same metal oxide ceramic forming base material. The advantage of this feature is discussed hereinbelow.

The thermistor ceramic sensor element 24 according to the present invention is formed from essentially pure titania powder. The thermistor chip member 24 may be fabricated in much the same manner as is taught in the noted patent 3,886,785 to Stadler et al. for fabrication of partial pressure of oxygen responsive ceramic sensor elements with one principal difference. Where the fabrication of a partial pressure of oxygen responsive ceramic element must assure a level of porosity in order to achieve a suitably rapid response time for the device to be of utility as an air/fuel ratio feedback sensor, fabrication of a similar device which is intended to be responsive principally to variation in temperature necessitates processing to minimize responsiveness to variation in partial pressure of oxygen. We have determined that such a device may be achieved by processing the base powder material to produce a device having a density which approaches, as closely as possible, the theoretical density of the ceramic material. Thus, the one principal difference in processing is that the titania powder is processed to achieve a ceramic material density approaching, as closely as possible, the theoretical density of the material.

Densification of the titania material may be accomplished by several methods including high temperature sintering (that is, sintering at temperatures in excess of about 2700°F (1475°C) and/or through use of a titania powder having a particle size range adjusted for maximum densification during sintering. Since it is desirable to obtain substantially identical electrical response to temperature variation from the thermistor, element 24, and from the partial pressure of oxygen sensor, element 26, substantially the same titania powder material is used to form both ceramic sensor elements 24, 26. Since uniformity of particle size consonant with obtaining the desired ceramic porosity is beneficial to produce a satisfactory partial pressure of oxygen responsive sensor, element 26, we have relied upon high temperature sintering to achieve the desired invention, element 24. While tests have indicated that even densified titania will continue to demonstrate some slight resistance variation as a function of partial pressure oxygen, it also has been determined that the time rate of response of resistance changes to changes in partial pressure of oxygen increases dramatically with increasing density of the titania ceramic material. Increases in response time of the order of 10,000 times have been observed in titania thermistors having a density approaching the theoretical density of titania. The time rate of response for densified titania increases sufficiently that, for all practical purposes in an internal combustion engine exhaust gas environment, the dependency of the thermistor resistance changes on partial pressure of oxygen changes can be ignored.

The preferred method of fabricating the thermistor chip member involves the preparation of a substantially pure titania powder. As titania has two phases, the anatase phase and the rutile phase, and the rutile phase is the high temperature stable phase, the titania powder could be comprised of a substantial majority of rutile phase material. In order to convert anatase phase material to rutile phase material, the material may be calcined, for example for two hours at 2100°F (1150°C) and then ball milled to produce powder having small particle sizes. The majority of the powder so produced will be rutile phase material. Calcining also improves the purity of the powder by volatilizing any volitilizable impurities. Consonant with processing to achieve a partial pressure of oxygen responsive device, powder may have 100% of the particles smaller in size than 20 microns and may have a substantial majority of the powder with the particle size smaller than about 10 microns. The processed powders may thereafter be mixed, for example in a ball mill, with an organic binder solution to form a slurry.

The slurry may be cast, that is, formed onto a tape or sheet of material such as cellulose acetate or polytetrafluoroethylene (PTFE) after which the slurry may be air dried, to form a sheet or tape or material. Suitably sized and shaped sensor element wafers of the air dried material may then be cut from the tape for further processing. A pair of lead wires may be inserted into the senor element at this stage and the sensor element may thereafter be sintered. In one form of construction, a pair of lead wires are placed between a pair of sensor element wafers prior to sintering. In another form of construction, a pair of lead wires are impressed into a single wafer prior to sintering. In order to achieve the desired high density titania thermistor, the step of sintering is carried out at a temperature of about 2750°F (1500°C) for a period of one (1) hour. Sintering to a pyrometric cone equivalent number 18 or greater will achieve sufficient densification for starting powders which are not optimized for densification. If the powder particle size range is adjusted for densification, a lower pyrometric cone equivalent could be used. In no case should the sintering temperature cause liquification of the material.

It will be appreciated that, by using substantially identical starting materials and by adjusting the processing to yield a densified sensor chip member, the electrical response of the sensor chip members to temperature variation will be substantially identical while the responsiveness of the densified chip member to variation in oxygen partial pressure will be greatly reduced. The resulting ceramic thermistor is thus compatible with and suited for operational use with the titania partial pressure of oxygen responsive chip member.

**Claims**

1. A thermistor comprising: a body (24) of ceramic material; and a pair of electrical leads (34, 36) embedded in mutually non-contacting relation in said body, said ceramic material demonstrating an electrical resistance which varies with temperature and with partial pressure of oxygen at elevated temperatures; characterised in that said body has a density sufficiently close to the theoretical density of the ceramic material that the rate of change of electrical resistance of the body in response to changes in partial pressure of oxygen is substantially reduced in comparison with the rate of change of electrical resistance in response to changes in temperature.

2. A termistor according to Claim 1 wherein said ceramic material is titania.

3. A termistor according to Claim 1 or Claim 2 wherein said body (24) has a density of at least ninety-seven per cent (97%) of the theoretical density of the ceramic material. ·

4. A temperature sensing device for an engine exhaust system comprising a housing (12) adapted to be mounted in the engine exhaust system and a thermistor according to any one of Claims 1 to 3 supported in the housing for location in the exhaust gases passing through the exhaust system.

5. A thermistor according to Claim 4 wherein a ceramic insulator (16) having a forwardly-projecting sensor portion (18), and a rearwardly-extending terminal portion is mounted in the housing, the sensor portion defining an open cavity (22) within which the thermistor is received, said cavity having a depth sufficient to shield the sensor from the flow of gaseous combustion products in the exhaust system, said insulator (16) defining passages extending rearwardly from the cavity to the terminal portion, the electrical leads (34, 36) from the thermistor being received in respective ones of the passages.

6. A method of manufacturing a termistor according to Claim 1 comprising the steps of forming a powder of high temperature stable phase ceramic material having an electrical resistance which varies with temperature and with partial pressure of oxygen; preparing a sinterable body (24) from said powder; and sintering the body, characterised by embedding a pair of electrical leads (34, 36) in the body in mutually non-contacting relation and in that the body is sintered sufficiently to produce a body having a density sufficiently close to the theoretical density of the ceramic material that the rate of change of electrical resistance of the body in response to changes in partial pressure of oxygen is substantially reduced in comparison with the rate of change of electrical resistance in response to changes in temperature.

7. A method according to Claim 6 wherein the step of sintering is carried out at a pyrometric cone equivalent number of at least eighteen (18).

8. A method according to Claim 6 or Claim 7 wherein the powder has 100% of its particles smaller than 20 microns in diameter.

9. A method according to any one of Claims 6 to 8 wherein the step of sintering is carried out at a temperature in excess of 2700°F (1475°C).

**Revendications**

1. Thermistance comprenant: un corps (24) en matière céramique et deux conducteurs électriques (34, 36) noyés dans ce corps de manière à ne pas se toucher, la matière céramique accusant une résistance électrique qui varie avec la température et avec la pression partielle de l'oxygène aux températures élevées, caractérisée en ce que le corps a une densité suffisamment proche de la densité théorique de la matière céramique pour que le taux de variation de la résistance électrique du corps en réaction aux variations de la pression partielle de l'oxygène soit sensiblement réduit par comparaison avec le taux de variation de la résistance électrique en réaction aux variations de température.

2. Thermistance suivant la revendication 1, caractérisée en ce que la matière céramique est du bioxyde de titane.

3. Thermistance suivant la revendication 1 ou 2, caractérisée en ce que le corps (24) a une densité d'au moins 97% de la densité théorique de la matière céramique.

4. Dispositif détecteur de température pour un système d'échappement de moteur comprenant un corps (12) propre à être monté dans le système d'échappement du moteur et une thermistance suivant l'une quelconque des revendications 1 à 3 montée dans le corps de manière à pouvoir être placée dans les gaz d'échappement passant dans le système d'échappement.

5. Thermistance suivant la revendication 4, caractérisée en ce qu'un isolateur en matière céramique (16) comportant une partie détectrice (18) en saillie vers l'avant et une partie à bornes s'étendant vers l'arrière est monté dans le corps, la partie détectrice délimitant une cavité ouverte (22) dans laquelle la thermistance est reçue, la cavité ayant une profondeur suffisante pour protéger le détecteur contre le flux de produits de combustion gazeux dans le système d'échappement, l'isolateur (16) délimitant des passages qui s'étendent vers l'arrière à partir de la cavité vers la partie à borne, les conducteurs électriques (34, 36) qui partent de la thermistance étant reçus dans des passages respectifs.

6. Procédé pour fabriquer une thermistance suivant la revendication 1, caractérisé en ce qu'on forme une poudre de matière céramique de phase stable aux hautes températures ayant une résistance électrique qui varie avec la température et avec la pression partielle de l'oxygène, on prépare un corps frittable (24) à partir de la poudre et on fritte le corps, caractérisé en ce qu'on noie deux conducteurs électriques (34, 36) dans le corps de manière qu'ils ne se touchent pas et on fritte le corps suffisamment pour produire un corps ayant une densité suffisamment proche de la densité théorique de la matière céramique pour que le taux de variation de la résistance électrique du corps en réaction aux variations de la pression partielle de l'oxygène soit sensiblement réduit par comparaison avec le taux de variation de la résistance électrique en réaction aux variations de température.

7. Procédé suivant la revendication 6, caractérisé en ce que le frittage est effectué à un numéro de cône pyrométrique équivalent d'au moins 18.

8. Procédé suivant la revendication 6 ou 7, caractérisé en ce que 100% des particules de la poudre sont d'une finesse inférieure à 20 microns.

9. Procédé suivant l'une quelconque des revendications 6 à 8, caractérise en ce que le frittage s'effectue à une température supérieure à 1475°C.

## Patentansprüche

1. Thermistor, bestehend aus einem Körper (24) aus keramischem Material und einem Paar in diesem Körper ohne gegenseitige Berührung eingebetteter elektrischer Leitungen (34, 36), wobei dieses keramische Material einen elektrischen Widerstand aufweist, der sich mit der Temperatur und dem Sauerstoffpartialdruck bei erhöhten Temperaturen ändert, dadurch gekennzeichnet, dass dieser Körper eine der theoretischen Dichte des keramischen Materials so naheliegende Dichte aufweist, dass die Geschwindigkeit von Aenderungen des elektrischen Widerstands des Körpers als Funktion von Aenderungen des Sauerstoffpartialdrucks gegenüber der Geschwindigkeit von Aenderungen des elektrischen Widerstands als Funktion von Temperaturänderungen erheblich verringert ist.

2. Thermistor nach Anspruch 1, worin dieses keramische Material Titändioxyd ist.

3. Thermistor nach Anspruch 1 oder 2, worin dieser Körper (24) eine Dichte von mindestens siebenundneunzig Prozent (97%) der theoretischen Dichte des keramischen Materials aufweist.

4. Temperaturfühlervorrichtung für ein Motorauspuffsystem, bestehend aus einem im Motorauspuffsystem anbringbaren Gehäuse (12) und einem im Gehäuse zur Anordnung in den durch das Auspuffsystem strömenden Auspuffgasen gelagerten Thermistor nach einem der Ansprüche 1 bis 3.

5. Thermistor nach Anspruch 4, worin ein keramischer Isolator (16) mit einem nach vorne vorstehenden Fühlerteil (18) und einem sich nach hinten erstreckenden Endteil im Gehäuse angebracht ist, wobei der Fühlerteil einen offenen Hohlraum (22) begrenzt, welcher den Thermistor aufnimmt, wobei dieser Hohlraum genügend tief ist, um den Fühler von der Strömung gasförmiger Verbrennungsprodukte im Auspuffsystem abzuschirmen, und wobei dieser Isolator (16) sich vom Hohlraum nach hinten zum Endteil erstreckende Durchlässe begrenzt, welche jeweils die von Thermistor kommenden elektrischen Leitungen (34, 36) aufnehmen.

6. Verfahren zur Herstellung eines Thermistors nach Anspruch 1, bei dem man stufenweise ein Pulver aus keramischem Material in der stabilen Hochtemperaturphase mit einem elektrischen Widerstand, der sich mit der Temperatur und dem Sauerstoffpartialdruck ändert, bildet, aus diesem Pulver einen sinterbaren Körper (24) herstellt und den Körper sintert, dadurch gekennzeichnet, dass man ein Paar elektrischer Leitungen (34, 36) in dem Körper ohne gegenseitige Berührung einbettet und den Körper so weit sintert, dass sich ein Körper mit einer der theoretischen Dichte des keramischen Materials so naheliegenden Dichte ergibt, dass die Geschwindigkeit von Aenderungen des elektrischen Widerstands des Körpers als Funktion von Aenderungen des Sauerstoffpartialdrucks gegenüber der Geschwindigkeit von Aenderungen des elektrischen Widerstands als Funktion von Temperaturänderungen erheblich verringert ist.

7. Verfahren nach Anspruch 6, worin die Sinterstufe bei einem Pyrometerkegelfallpunkt von mindestens achtzehn (18) durchgeführt wird.

8. Verfahren nach Anspruch 6 oder 7, worin 100% der Pulverteilchen einen Durchmesser kleiner als 20 Mikron aufweisen.

9. Verfahren nach einem der Ansprüche 6 bis 8, worin die Sinterstufe bei einer Temperatur oberhalb 1475°C durchgeführt wird.

FIG. 2.

FIG. 1.

FIG. 3.

0 001 508